# EUROPÄISCHE PATENTSCHRIFT

(11) **EP 0 612 589 B1**
(45) Veröffentlichungstag und Bekanntmachung des Hinweises auf die Patenterteilung: **07.05.1997**
(21) Anmeldenummer: 94102096.8
(22) Anmeldetag: 11.02.1994
(51) Int. Cl.: B25F 5/00, B25B 21/00, B23B 45/00

(54) **Schaltvorrichtung für Elektrowerkzeuge**
Control device for electric tools
Dispositif de commande pour outils électriques

(30) Priorität: 26.02.1993 DE 4305967
(43) Veröffentlichungstag der Anmeldung: 31.08.1994
(73) Patentinhaber: Kress-elektrik GmbH + Co. Elektromotorenfabrik, D-72403 Bisingen (DE)
(72) Erfinder: Kress, Willy, D-72403 Bisingen (DE); Binder, Alfred, D-72403 Bisingen (DE)
(74) Vertreter: Otte, Peter, Dipl.-Ing.

(56) Entgegenhaltungen:
- EP-A- 0 222 658
- EP-A- 0 408 988
- DE-A- 2 728 961
- DE-A- 3 627 869
- DE-U- 9 302 807
- FR-A- 2 526 348

## Beschreibung

### Stand der Technik

Die Erfindung geht aus von einer Schaltvorrichtung in einem Elektrowerkzeug, insbesondere in einem Elektrohandwerkzeug, nach dem Oberbegriff des Anspruchs 1.

Es ist bekannt, bei allerdings hauptsächlich speziellen Elektrohandwerkzeugen eine Arretierfunktion für die Ausgangswelle oder Werkzeugspindel vorzusehen, insbesondere also bei Bohr- oder Schlaghammern, damit bei diesen bei formschlüssig festgehaltener Ausgangswelle, jedoch weiterlaufendem Schlagwerk eine Meiselfunktion realisiert werden kann, bei der sichergestellt ist, daß sich ein in der Werkzeugaufnahme des Handwerkzeugs eingespannter Meisel bei Meiseln nicht verdrehen kann. So bewirkt bei einem bekannten, dem Oberbegriff des Anspruchs 1 entsprechenden Bohr- oder Schlaghammer (DE 36 27 869 A1) ein Kupplungsschiebeglied in Form eines Steuerrings, welches zusätzlich noch weitere Funktionen erfüllt, in einer ersten Eingriffsposition mit einem Zahnkranz den Drehantrieb und in mindestens einer zweiten, aus der Antriebsverbindung mit der Antriebswelle gelösten Position (Meiselfunktion) eine drehfeste Arretierung der Ausgangsspindel mit Hilfe eines gehäusestationären Arretierglieds, nämlich einem in einem Gehäusebereich eingelassenen Zahnrad, bei aufrechterhaltendem Schlagantrieb. Geschaltet werden die unterschiedlichen Funktionen mit Hilfe eines von außen zugänglichen manuell zu betätigenden Drehknopfes, der das Kupplungsschiebeglied in der Längsachse der Werkzeugspindel in verschiedene Rastpositionen verschiebt, wobei dann jeweils unterschiedliche Funktionen realisiert werden. Dabei sind insgesamt vier verschiedene Betriebszustände möglich, nämlich reiner Schlagantrieb bei abgeschaltetem Drehantrieb, Zuschaltung des Drehantriebs sowie in einer weiteren Stellung Fangen des Schlägers des Schlagantriebs mittels Halteelementen, so daß ein reiner Drehantrieb resultiert, und schließlich in einer vierten Stellung (Spindellock) der Schlagbetrieb mit drehfest blockiertem Werkzeug, wobei in diesem Fall der Steuerring ganz nach vorn in Richtung auf die Werkzeugaufnahme geschoben ist, wodurch eine nur für diesen Zweck erforderliche Verzahnung in das gehäusefeste Zahnrad eingreift.

Eine solche Umschaltvorrichtung kann deshalb als kompliziert angesehen werden, weil das Kupplungsschiebeglied insgesamt vier unterschiedliche Funktionen zu erfüllen hat und lediglich für die Spindellock-Position zwei zusätzliche Zahnräder erforderlich sind, ein gehäusestationäres Zahnrad und das mit diesem in Wirkverbindung gelangende Zahnrad am Kupplungsschiebeglied.

In ähnlicher Weise ist bei einem bekannten Bohrhammer mit arretierbarem Werkzeughalter (DE 27 28 961 A1) eine Lockfunktion realisiert, indem ein mit dem Werkzeughalter drehfest verbundenes Kupplungsteil durch axiales Verschieben mittels eines Stellorgans in einem mit dem Antriebsrad kuppelnde Stellung, in eine Leerdrehstellung und in eine gegenüber dem Gehäuse des Bohrhammers arretierbare Stellung gebracht werden kann, wobei das Kupplungsteil in dieser letzten Position zur Arretierung an der dem Antriebsrad abgewandten Stirnseite Vorsprünge bzw. Ausnehmungen aufweist, die in Eingriff mit entsprechenden gehäuseseitigen Vorsprüngen bzw. Ausnehmungen bringbar sind. Auch bei dieser Ausführungsform übernimmt das Kupplungsteil die zusätzliche Lockfunktion.

Es kann allgemein davon ausgegangen werden, daß solche Lockfunktionen bei drehangetriebenen Elektrohandwerkzeugen zukünftig nicht mehr allein oder überwiegend bei Bohrhammern oder sonstigen Elektrowerkzeugen mit vergleichbarer Funktion eingesetzt werden, sondern ganz allgemein eine zusätzliche Schaltfunktion bei Elektrohandwerkzeugen bilden, um beispielsweise das Bohrfutter problemlos von der Spindel zu lösen oder allgemein um Werkzeuge in der Werkzeugaufnahme schlüssellos einspannen zu können.

Die Realisierung einer speziellen Lockfunktion ist ferner bekannt aus der EP-A-222 658, und zwar für einen motorisch angetriebenen und in beide Drehrichtungen umschaltbaren Schrauber. Damit ein solcher elektrischer Schrauber bei Auftreten sehr hoher, auf die Spindel einwirkender Momente auch als reine, manuell betätigte Schraubendreher-Ratsche verwendet werden kann, also ohne daß der Elektromotor überhaupt zum Einsatz kommt, ist es erforderlich, die Schraubspindel gegen das Schraubergehäuse für jeweils eine Drehrichtung zu arretieren, so daß der Benutzer das ganze Gerät selbst als Schraubendreher einsetzen kann. Zu diesem Zweck ist der Blockermechanismus für die Spindel so ausgebildet, daß, durch Kopplung mit dem Triggerschalter, die Blockierung der Schraubspindel über eine spezielle Kupplung grundsätzlich dann realisiert wird, wenn der Triggerschalter losgelassen wird und hierdurch auch der Elektromotor stromlos wird. Die Blockierung erfolgt über komplizierte Stell- und Getriebemittel und wird letztlich realisiert durch den Eingriff von federvorgespannten Blockierfingern in konzentrisch umlaufende Ringnuten eines Kupplungszahnrads, wobei die Blockierfinger jeweils nur für eine Drehrichtung wirksam sind und zueinander in konzentrisch versetzten Ebenen liegen. Jeder der Blockierfinger kann jeweils nur eine Drehrichtung blockieren und bildet für die andere Drehrichtung eine ratschenähnliche Mitnahmevorrichtung für die manuelle Schraubenzieherbetätigung des Schraubers aus.

In der stromlosen Ausgangsposition sind durch Eingriff beider Blockierfinger in ihre beiden zugeordneten Ringnuten beide Drehrichtungen innerhalb einer gewissen Winkellose blockiert; wird der Trigger nach Festlegung auf eine Drehrichtung durch ein separates Schaltglied betätigt, wird lediglich einer der Blockierfinger aus seinem Blockiereingriff zurückgezogen und die gewünschte Drehrichtung freigegeben. Wird der Trigger dann wieder losgelassen, wird das Gerät zu einer Ratsche mit einer freigegebenen Drehrichtung.

Ein solcher Mechanismus steht im Gegensatz zu der Grundkonzeption vorliegender Erfindung, bei der es darum geht, unter Vermeidung einer grundsätzlich zwangsweisen Koppelung zwischen der elektrischen Stromversorgung des Antriebsmotors und der Blockiereinrichtung ein manuelles Blockieren durch ein manuell willkürlich betätigtes Arretierglied nur dann zuzulassen, wenn ein elektrisches Schaltmittel in einem beliebigen vorhergehenden Schaltschritt eine Ausschaltposition für den Elektromotor erreicht hat.

Daher liegt der vorliegenden Erfindung die Aufgabe zugrunde, eine einfach aufgebaute Schaltvorrichtung in einem Elektrowerkzeug zu schaffen, die eine sichere Spindelarretierung (Lockfunktion) gewährleistet und dabei gleichzeitig sicherstellt, daß die Aktivierung der Lockfunktion nur bei ausgeschaltetem, das Werkzeug antreibenden Elektromotor möglich ist.

### Vorteile der Erfindung

Die Erfindung löst diese Aufgabe mit den Merkmalen des Anspruchs 1 und hat den Vorteil, daß ohne größeren Aufwand eine formschlüssige und kräftige Spindelarretierung, also die sogenannte Lockfunktion möglich ist, ohne daß einerseits ein Kupplungsglied, ein Steuerring oder ein sonstiges beliebiges Getriebeteil diese Funktion zusätzlich bei dann notwendigerweise komplizierterem Aufbau übernehmen muß, andererseits aber dennoch sichergestellt ist, daß der Drehantrieb des mit einer solchen Schaltvorrichtung ausgerüsteten Elektrowerkzeugs sicher unterbrochen ist, also eine Blockierung des antreibenden Elektromotors ausgeschlossen ist.

Durch die gleichzeitige Realisierung von zwei verschiedenen Funktionen bei Betätigung eines Arretierschiebers sind Fehlbedienungen ausgeschlossen, da die vom Arretierschieber in eine formschlüssige Lockposition mit der Werkzeugspindel gebrachte Arretierstange nur dann in diese Position gelangen kann, wenn der das Werkzeug antreibende Elektromotor unter allen Umständen stromlos ist.

Die Abtastung der elektrischen Ausschaltposition erfolgt ferner mit Vorteil durch mechanischen Eingriff in dem Sinne, daß ein Koppelglied an der Arretierstange nur dann das Einfahren der Arretierstange in die Lockposition ermöglicht, wenn das Koppelglied selbst sich mechanisch ungehindert bewegen kann, also nicht durch Sperrglieder, die eine elektrische Einschaltposition des Elektromotors anzeigen, an einer Gleitbewegung gehindert wird.

Ein weiterer Vorteil vorliegender Erfindung besteht darin, daß bei einer solchen insofern "narrensicheren" Lockfunktion auch einfachere Ausführungsformen von Elektrohandwerkzeugen kostengünstig ausgerüstet werden können, bevorzugt 1-Gang-Bohrmaschinen u. dgl., die jedoch im Motorbereich eine bevorzugte Ausgestaltung besitzen, indem am Motor selbst ein Schaltring vorgesehen ist, der in den Bereich der Borstenlagerung eingreift und für eine Drehrichtungsumkehr der Werkzeugspindel sowohl die Kohlen in die optimale Winkelposition für die jeweilige Drehrichtung des Elektromotors verschiebt als auch gleichzeitig in diesem Bereich elektrische Umschaltungen bzw. Schaltbewegungen durchführt, die eine Stromrichtungsumkehr zu den Bürsten bzw. Ankerwicklungen hervorrufen. Bei einer solchen "Schaltringrichtverstellung", die für sich gesehen bei Elektromotoren, insbesondere sogenannten Universalmotoren bekannt ist, ergibt sich je nach Bauart zwischen den jeweiligen Endpositionen für die Drehrichtungsumkehr eine elektrische Aus-Stellung für den Elektromotor, in welcher in der Mittelstellung des Schaltrings für die Bürstenverstellung die Stromzufuhr zum antreibenden Elektromotor an mindestens einer der beiden elektrischen Zuführungen, üblicherweise aber an beiden, unterbrochen ist. Da eine solche Stromrichtungsumkehr über eine externe Schaltringbetätigung am Werkzeuggehäuse von Elektrohandwerkzeugen bekannt ist, braucht auf diese Gegebenheiten hier nicht weiter eingegangen zu werden; es wird, auch hinsichtlich einer vollständigen Offenbarung der folgenden Ausführungen verwiesen auf die vorveröffentlichten Dokumente deutsches Gebrauchsmuster G bzw. deutsche Offenlegungsschrift DE-OS des gleichen Anmelders, in denen speziell Schaltringverstellungen an Universalmotoren für Elektrohandwerkzeuge einschließlich der jeweiligen elektrischen Aus-Position für den Motor bis in alle Einzelheiten beschrieben sind. Da es sich bei dem bevorzugten Ausführungsbeispiel vorliegender Erfindung ebenfalls um einen solchen Universalmotor mit von außen am Werkzeuggehäuse zugänglicher Schaltringverstellung für die Drehrichtungsumkehr einschließlich Abschalten des Motors handelt, stellt diese vorveröffentlichte Beschreibung eines solchen Motors einen integralen Bestandteil auch der vorliegenden Anmeldung dar.

Durch die in den Unteransprüchen aufgeführten Maßnahmen sind vorteilhafte Weiterbildungen und Verbesserungen der Erfindung möglich. Besonders vorteilhaft ist die Ausbildung der Lockfunktion-Schaltvorrichtung für die Spindelarretierung als sich im wesentlichen über die axiale Länge des Handwerkzeugs in dessen oberem Bereich erstreckendes Arretierteil, entweder in einstückiger Ausbildungsform oder in Form einer mit einem die Motor-Aus-Position am Schaltring erfassendem Gleitstück gekoppelten Arretierstange, die formschlüssig je nach Axialposition eine Drehbewegung der Spindel blockiert, wobei beide Teile von einem äußeren Arretierschieber gemeinsam betätigt werden.

### Zeichnung

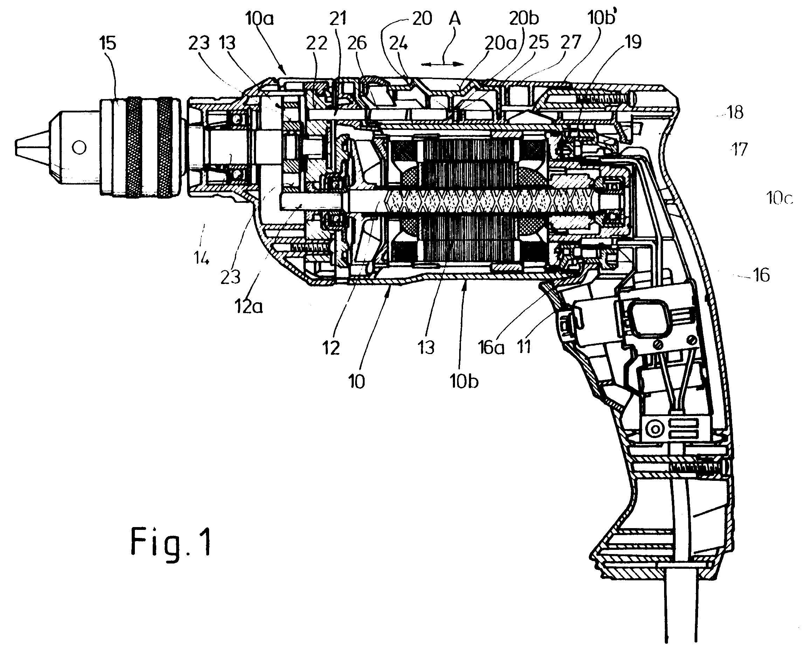

Ein Ausführungsbeispiel der Erfindung ist in der Zeichnung dargestellt und wird in der nachfolgenden Beschreibung näher erläutert.

Die Zeichnung zeigt in einer seitlichen Schnittdarstellung eine bevorzugte Ausführungsform einer 1-Gang-Handbohrmaschine mit antreibendem Elektromotor in Universalausführung mit Bürstenverstellung einschließlich Motor-Aus-Position durch von außen betätigbarem Schaltring.

### Beschreibung der Ausführungsbeispiele

Der Grundgedanke vorliegender Erfindung besteht darin, bei einer Arretierschieberverstellung für das Bewirken einer Spindellockfunktion durch formschlüssigen Eingriff gleichzeitig, also durch die gleiche Bewegung mechanisch die elektrische Aus-Schaltstellung des antreibenden Elektromotors sicherzustellen, bevorzugt durch ledigliches Abtasten einer schon durch einen vorhergehenden Schaltschritt erreichten Aus-Schaltposition im Bereich einer Schaltringverstellung für den Elektromotor.

Das in der Zeichnung gezeigte Elektrohandwerkzeug 10 in Form einer 1-Gang-Handbohrmaschine umfaßt drei deutlich voneinander unterscheidbare Teilmodule, nämlich einen Getriebemodulteil 10a, einen zentralen Motorhauptteil 10b sowie einen an diesem angesetzten Handgriffteil 10c mit elektrischer Zuleitung und sogenanntem Gasgebegriff für die Verstellung der Motorgeschwindigkeit.

Die einzelnen Teilmodule umfassen jeweils zugeordnete eigene äußere Werkzeuggehäuse, die an den Schnittstellen jeweils miteinander verbunden sind; hierauf kommt es allerdings nicht an, da die Erfindung für jede beliebige Ausführungsform von Elektrowerkzeugen, speziell Elektrohandwerkzeugen eingesetzt werden kann.

Die Ausgangswelle 12 des antreibenden Elektromotors 13 in der bevorzugten Ausführungsform eines Universalmotors mit Schaltringverstellung für Drehrichtungsumkehr und Motor-Aus-Position treibt über ein Ritzel 12a ein Zahnrad 13 an, welches auf der Spindel 14 des Elektrohandwerkzeugs 10 sitzt, die nach vorn eine Werkzeugaufnahme 15 lagert z.B. Dreibackenfutter.

Wie weiter vorn schon erwähnt, ist eine ausführliche Beschreibung der Schaltringverstellung bei einem solchen Elektromotor an dieser Stelle nicht erforderlich, da anderweitig schon beschrieben; der einer äußeren Manipulation, also Verstellbewegung zugängliche Stellring für die Schaltringverstellung ist mit 16 bezeichnet; der Stellring greift zur Bürstenverstellung über Vorsprünge in eine axiale Plattenschichtung ein, darunter die Bürstenträgerplatte, was in der Darstellung der Zeichnung nicht besonders gut erkennbar ist. Jedenfalls ist mindestens ein seitlicher Schieber am Werkzeuggehäuse vorhanden, der die Verdrehung des Stellringes 16 rastbar in drei Positionen durch manuelle Einwirkung des Benutzers ermöglicht, so daß der Stellring 16 in verschiedene, jedoch in ihrer Winkelposition vorgegebene, also definierte Stellungen verdreht werden kann.

Die beiden Endanschlagspositionen dienen der Drehrichtungsverstellung in der einen oder anderen Richtung; eine Mittelposition, die in der Darstellung der Zeichnung gezeigt ist, bewirkt die elektrische Ausschaltung des Motors über Unterbrechen der Kontaktverbindungen zwischen Schaltring und einer zugeordneten Schaltplatte am Statorgehäuse so, wie dies in den angezogenen Druckschriften beschrieben ist. Diese Hinweise sind deshalb getroffen, weil in der in der Zeichnung gezeigten Aus-Schaltposition für den Motor am Stellring 16 - und nur in dieser Position - eine Nut oder Ausnehmung 17 sich in einer Position befindet, in welcher ein entsprechend geformtes Taststück 18 eines Gleitstücks 19 in diese Nut 17 einfahren kann, so daß es möglich ist, das Gleitstück 19 axial in einer entsprechenden Gleitführungslagerung nach vorn zu verschieben.

Zur Blockierung der Spindel, also zur Realisierung der Lockfunktion befindet sich von außen zugänglich am Gehäuse, bevorzugt an dessen Oberseite ein vorzugsweise mit einer Griffmulde 20a ausgestatteter Arretierschieber 20, der eine Gleitverschiebebewegung in axialer Richtung zur Motorwelle bzw. Spindel entsprechend dem Doppelpfeil A durchführen kann, wobei er in geeigneter Weise durch Gehäusevorsprünge, Ausnehmungen, Rippen, Verstärkungen u. dgl. geführt ist; bei dem dargestellten Ausführungsbeispiel sitzt er gleitverschieblich in einem separaten oberen Gehäuseeinsatz 10b'.

Ferner befindet sich im oberen Teil des Werkzeuggehäuses axial gleitverschieblich gelagert ein Arretierglied in Form einer Arretierstange 21, deren vorderer Teil in einer Durchtrittsbohrung 22 des Getriebegehäuses geführt ist und dann, wenn die Arretierstange 21 als Ganzes weiter nach vorn geschoben wird, in entsprechend geformte Ausnehmungen 23 des Zahnrads 13 eingreift, die bevorzugt gleichmäßig über den Umfang verteilt sind. Erkennbar ergibt sich hierdurch eine formschlüssige Spindelarretierung, wobei die Axialbewegung der Arretierstange 21 mit der Arretierschiebebewegung gekoppelt ist, z.B. indem ein entsprechender Vorsprung 20b am Arretierschieber in eine Ringnut 24 an der Arretierstange 21 eingreift. Die Arretierstange selbst ist in ihrem hinteren Bereich teilweise über Ausnehmungen und Vorsprünge auch im weiter vorn schon erwähnten Gleitstück 19 aufgenommen, wobei einer der Vorsprünge 25 zur sicheren Verbindung von Gleitstück 19 und Arretierstange 21 auch in deren Ringnut 24 noch eingreifen kann. Über eine Vorspannungsfeder 26 wird die Arretierstange 21 in die in der Zeichnung dargestellte zurückgezogene Position vorgespannt, so daß die Arretierstange jedenfalls dann außer Eingriff mit der Spindel gehalten wird, wenn keine Einwirkung von außen erfolgt.

Der Arretierschieber 20 selbst ist mit weiteren Vorsprüngen 27 mit dem Gleitstück 19 verbunden, wobei darauf hingewiesen wird, daß diese zur Realisierung der Lockfunktion gehörenden Komponenten Arretierstange 21, Schieber 20 und Gleitstück 19 auch ganz oder teilweise einstückig oder, wie es sich versteht, auch in sonstiger beliebiger Form aufgebaut sein können.

Entscheidend ist lediglich, daß die Lockfunktions-Komponenten ein langgestrecktes Axialglied umfassen, welches einerseits axial nach vorn, also zur Werkzeugaufnahme gerichtet in Durchbrechungen von mit der Spindel drehfesten Getriebeelementen eingreift und in entgegengesetzter Richtung die elektrischen Versorgungsspannungsbereiche für den Elektromotor so abtastet, daß durch formschlüssige Blockierung ein Aktivieren der Lockfunktion nur möglich ist, wenn der Motor stromlos ist. Dieses Axialglied ist durch Manipulation von außen in beiden axialen Bewegungsrichtungen verschiebbar, wobei durch die Vorspannung der Feder 26, die als Vorspannungsfeder bei dem dargestellten Ausführungsbeispiel die Arretierstange 21 umgibt und sich nach vorn an stationären Gehäuseteilen und rückwärts beispielsweise an einem Bund der Arretierstange oder an der Stirnfläche des mit dieser gekoppelten Gleitstücks abstützt, das Axialglied nach hinten, also in der Position "Lockfunktion gelöst" vorgespannt ist und auch üblicherweise bei Loslassen automatisch in die gelöste Position zurückkehrt.

Ein willkürliches Verschieben des Arretierschiebers 20 in die Lockposition, in welcher der vordere Endbereich 22 der Arretierstange 21 in periphere Axialbohrungen 23 des Spindelzahnrades 13 eingreift, ist jedenfalls nur möglich, wenn der rückwärtige nachlaufende Teil 17 des Axialgliedes, also bei dem dargestellten Ausführungsbeispiel des mit der Arretierstange 21 und dem Arretierschieber 20 gekoppelten Gleitstücks in die Ausnehmung 17 des Stellrings 16 eingreifen kann. Dies ist nur der Fall, wenn sich die Bürstenverstelleinrichtung in der für den Elektromotor stromlosen Mittelposition befindet. In allen anderen Positionen ist der Stellring 16 im Bereich des Sensorstücks 17 voll ausgeführt oder verfügt jedenfalls über Querrippen, die ein Eindringen des Sensorstücks 18 bis auf die axiale Höhe der Stellringausnehmung 17 verhindern.

## Patentansprüche

1. Schaltvorrichtung in einem Elektrowerkzeug, insbesondere Elektrohandwerkzeug wie Ein- oder Mehrgang-Handbohrmaschine, Bohr- und Schlaghammer, Schrauber u. dgl., zur Arretierung der Werkzeugspindel, oder anders genannt Lockfunktion, durch formschlüssigen Eingriff, gekennzeichnet durch einen einer manuellen Betätigung zugänglichen Arretierschieber (20) am Werkzeuggehäuse (10), der ein die Spindel gegen jede Drehbewegung blockierendes Axialglied (19, 21) zum formschlüssigen Eingriff in ein sich drehfest mit der Werkzeugspindel (14) drehendes Teil antreibt, wobei gleichzeitig durch das rückwärts bis in den elektrischen Schaltbereich für den Antriebsmotor (13) geführte Axialglied (19, 21) eine durch einen vorhergehenden Schaltschritt eines elektrischen Schaltmittels gesicherte Ausschaltposition für den Elektromotor (13) erfaßt und ausschließlich für diesen Fall des stromlosen Elektromotors (13) die Verschiebebewegung des Arretierschiebers (20) freigegeben ist.

2. Schaltvorrichtung nach Anspruch 1, dadurch gekennzeichnet, daß das vom Arretierschieber (20) angetriebene Axialglied (19, 21) für die Lockfunktion eine vordere, einen Getriebegehäuseteil (22) durchsetzende Arretierstange (21) aufweist, die mit einem rückwärtigen Gleitstück (19) gekoppelt ist, welches mittels eines Sensorstücks (18) die elektrische Schaltposition des Elektromotors (13) erfaßt.

3. Schaltvorrichtung nach Anspruch 2, dadurch gekennzeichnet, daß die Arretierstange (21) mit einem vorderen Blockierende (22) in periphere Öffnungen (23) eines drehfest mit der Werkzeugspindel (14) verbundenen und mit dem Antriebsritzel (12a) des Elektromotors kämmenden Zahnrades (13) bei nach vorne zur Werkzeugaufnahme gerichteter Verschiebebewegung unter dem Antrieb des äußeren Arretierschiebers (20) eingreift.

4. Schaltvorrichtung nach einem der Ansprüche 1 bis 3, dadurch gekennzeichnet, daß der elektrische Antriebsmotor (13) ein Universalmotor mit Drehrichtungsumkehrsteuerung mittels eines verdrehbaren Bürstenträgerrings und einer stromlosen Mittelstellung ist, dessen einer äußeren Betätigung zugänglicher Stellring (16) in einer für den Antriebsmotor (13) stromlosen Mittelstellung eine offene Steuerausnehmung (17) aufweist, in welche das rückwärtige Sensorstück (18) am Axialglied eingreift.

5. Schaltvorrichtung nach Anspruch 4, dadurch gekennzeichnet, daß das Sensorstück (18) Teil eines mit der Arretierstange (21) gekoppelten Gleitstücks (19) ist, welches die Arretierstange (21) teilweise umgebend nach vorn in Richtung auf die Werkzeugaufnahme geführt und im Motorgehäuse und/oder von angrenzenden Komponenten axial gleitverschieblich gelagert ist.

6. Schaltvorrichtung nach einem der Ansprüche 2-5, dadurch gekennzeichnet, daß der Arretierschieber (20) mit Querrippen (20, 27) in Ringnuten (25) und/oder Ausnehmungen von Arretierstange (21) bzw. Gleitstück (19) eingreift und selbst eine Griffmulde (20a) für seine Verschiebung aufweist.

7. Schaltvorrichtung nach einem der Ansprüche 2-6, dadurch gekennzeichnet, daß eine Vorspannungsfeder (26) vorgesehen ist, die das axiale Gleitstück in Gegenrichtung zur Lockposition vorspannt.

8. Schaltvorrichtung nach Anspruch 7, dadurch gekennzeichnet, daß die Vorspannungsfeder (26) die Arretierstange (21) als Druckfeder umgibt und sich einerseits an stationärem Gehäuseteil und andererseits an einer vorderen Ringfläche des Gleitstücks (19) abstützt, welches den hinteren Teil der Arretierstange mindestens teilweise umgibt und durch Ringvorsprünge, Anschläge, Rippen u. dgl. axial unlösbar sichert.

9. Schaltvorrichtung nach Anspruch 1, dadurch gekennzeichnet, daß das Axialglied auf einem Zwischenboden des Gehäuses gelagert ist.

## Claims

1. A switching device in an electric tool, in particular an electric hand tool such as a single-speed or multiple-speed hand drill, a hammer drill, a screwdriver and the like, for locking the tool spindle, also called a locking function, by engagement with positive locking, **characterized by** a locking slide (20) which is accessible for manual actuation on the tool housing (10) and which drives an axial member (19, 21) preventing the spindle from making any rotational movement for engaging with positive locking in a part rotating in a rotationally fixed manner with the tool spindle (14), wherein a switch-off position - produced by a preceding switching step of an electrical switching means - for the electric motor (13) is detected by the axial member (19, 21) which is guided backwards into the electrical switching region for the drive motor (13) and at the same time the displacement movement of the locking slide (20) is released exclusively for this state of the electric motor (13) without current.

2. A switching device according to Claim 1, **characterized in that** the axial member (19, 21) - driven by the locking slide (20) - for the locking function comprises a front locking rod (21) which passes through a part (22) of the gearing housing and which is coupled to a rear sliding member (19) which detects the electrical switching position of the electric motor (13) by means of a sensor member (18).

3. A switching device according to Claim 2, **characterized in that** the locking rod (21) engages by a front blocking end (22) in peripheral openings (23) in a gearwheel (13) connected in a rotationally fixed manner to the tool spindle (14) and meshing with the driving pinion (12a) of the electric motor with the displacement movement directed forwards to receiving the tool-receiving means when driven by the outer locking slide (20).

4. A switching device according to one of Claims 1 to 3, **characterized in that** the electric motor (13) is a universal motor with a control means for reversing the direction of rotation by means of a rotatable brush-holder ring and a neutral setting without current, of which the setting ring (16) accessible for actuation from the outside has an open control recess (17) - into which the rear sensor member (18) on the axial member engages - in a neutral setting without current for the drive motor (13).

5. A switching device according to Claim 4, **characterized in that** the sensor member (18) is part of a sliding member (19) which is coupled to the locking rod (21) and which, surrounding the locking rod (21) in part, is guided forwards in the direction of the tool-receiving means and is mounted in the motor housing and/or by adjacent components so as to slide axially.

6. A switching device according to one of Claims 2 to 5, **characterized in that** the locking slide (20) engages with transverse ribs (20, 27) in annular grooves (25) and/or recesses in the locking rod (21) and the sliding member (19) respectively and itself has a recessed grip (20a) for its displacement.

7. A switching device according to one of Claims 2 to 6, **characterized in that** a pre-stressing spring (26) is provided which pre-stresses the axial sliding member in the direction contrary to the locking position.

8. A switching device according to Claim 7, **characterized in that** the pre-stressing spring (26) surrounds the locking rod (21) as a compression spring and is supported at one end on a stationary part of the housing and at the other end on a front annular face of the sliding member (19) which surrounds the rear part of the locking rod at least in part and secures it axially undetachably by annular projections, stop, ribs and the like.

9. A switching device according to Claim 1, **characterized in that** the axial member is mounted on an intermediate partition of the housing.

## Revendications

1. Dispositif de commande dans un outil électrique, en particulier dans un outil électrique à main comme une perceuse à main à une ou plusieurs vitesses, une perceuses à percussion, une visseuse et analogues, servant à bloquer la broche de l'outil, ou en d'autres termes en fonctionnement du verrouillage, par une venue en prise par engagement par la forme,
caractérisé
par un poussoir de blocage (20) sur le carter de l'outil (10), accessible à un actionnement manuel qui entraîne un organe axial (19, 21) bloquant la broche contre tout mouvement de rotation pour obtenir une venue en prise par engagement par la forme dans une pièce qui tourne de façon solidaire en rotation avec la broche de l'outil (14), alors qu'on détecte en même temps une position de débranchement pour le moteur électrique (13), assurée par un pas de commutation antérieur d'un dispositif de commande électrique, grâce à l'organe axial (19, 21) guidé en arrière jusque dans la zone électrique de commande du moteur d'entraînement (13) et que le mouvement de translation du poussoir de blocage (20) est libéré exclusivement dans le cas du moteur électrique sans courant (13).

2. Dispositif de commande selon la revendication 1,
caractérisé en ce que
l'organe axial (19, 21) entraîné par le poussoir de blocage (20) présente pour le fonctionnement du verrouillage une tige de blocage (21) antérieure, passant à travers une partie (22) du carter du mécanisme de transmission, tige qui est couplée avec une pièce coulissante postérieure (19), qui détecte la position de commande électrique du moteur électrique (13) au moyen d'une pièce de détecteur (18).

3. Dispositif de commande selon la revendication 2,
caractérisé en ce que
la tige de blocage (21) vient en prise par une extrémité antérieure de blocage (22) dans des orifices périphériques (23) d'une roue dentée (13) reliée de façon solidaire en rotation à la broche de l'outil (14) et engrenant avec le pignon d'entraînement (12a) du moteur électrique lors du mouvement de translation en avant en direction du logement de l'outil en entraînant le poussoir de blocage extérieur (20).

4. Dispositif de commande selon l'une des revendications 1 à 3,
caractérisé en ce que
le moteur électrique d'entraînement (13) est un moteur universel avec une commande d'inversion du sens de rotation au moyen d'une bague porte-balais qui peut tourner et d'une position médiane sans courant, dont la bague de réglage (16) qui est accessible à un actionnement extérieur présente dans une position médiane sans courant pour le moteur d'entraînement (13) un évidement ouvert de commande (17), dans lequel la pièce du détecteur (18) postérieure vient en prise sur l'organe axial.

5. Dispositif de commande selon la revendication 4,
caractérisé en ce que
la pièce de détecteur (18) fait partie d'une pièce coulissante (19) couplée avec la tige de blocage (21), pièce coulissante (19) qui guide la tige de blocage (21) en l'entourant partiellement vers l'avant en direction du logement de l'outil et qui est montée axialement en coulissant par glissement dans le carter du moteur et/ou est montée par des composants adjacents.

6. Dispositif de commande selon l'une des revendications 2 à 5,
caractérisé en ce que
le poussoir de blocage (20) vient en prise par des nervures transversales (20, 27) dans des rainures annulaires (25) et/ou des évidements de la tige de blocage (21) ou de la pièce coulissante (19) et présente même une poignée encastrée (20a) pour sa translation.

7. Dispositif de commande selon l'une des revendications 2 à 6,
caractérisé en ce que
l'on prévoit un ressort de précontrainte (26), qui met en précontrainte la pièce axiale coulissante en sens inverse par rapport à la position de verrouillage.

8. Dispositif de commande selon la revendication 7,
caractérisé en ce que
le ressort de précontrainte (26) entoure la tige de blocage (21) sous la forme d'un ressort de compression et prend appui d'une part sur la partie fixe du boîtier et d'autre part sur une surface annulaire antérieure de la pièce coulissante (19), qui entoure au moins en partie la partie arrière de la tige de blocage et est bloquée axialement de façon inamovible par des saillies annulaires des butées, des nervures ou analogues.

9. Dispositif de commande selon la revendication 1,
caractérisé en ce que
l'organe axial est monté sur un fond intermédiaire du carter.
